# EUROPEAN PATENT APPLICATION

(11) **EP 1 293 815 A1**
(43) Date of publication of application: **19.03.2003**
(21) Application number: 02425516.8
(22) Date of filing: 05.08.2002
(51) Int. Cl.: G02B 6/44

(54) **Cover for fiber optic splice cassette**

(30) Priority: 14.09.2001 IT RM20010175 U
(71) Applicant: FIBOT HOLDING LTD., Pieta'MSD - Malta (MT)
(72) Inventor: Bernardini, Giuseppe, 00128 Roma (IT)
(74) Representative: Iannone, Carlo Luigi

(57) **Abstract**

The invention concerns an improved connection modular tray for optic and/or copper mixed cables comprising a base (1) provided with layout and anti-stress paths (3) for housing optic fibres and for dispersing their exceeding length, characterised in that it further comprises a protection cover (2) and means for blocking said base (1) with said protection cover (2).

## Description

The present invention generally relates to the construction and to the use of connection containers and to termination modules for optic cables, and more specifically concerns the construction of an improved connection modular tray for optic and/or copper mixed cables.

Still more specifically, the present invention concerns improvements to the construction and to the method of use of a mechanical closure device for each single connection tray contained within connection containers and within termination modules.

As it is well known, companies managing the telephone and telecommunication services and which realises their own cable transmission network, usually employ the optic fibres as transmission physical support, said fibres being collected in bundles to realise optic cables, in view of the high transportation capability and efficiency of the same.

Optic fibres are very delicate and it is very important that they are mechanically protected from outside, to prevent phenomenons such as the increase of the intrinsic attenuation and/or the reduction of the operative life of the same fibres. This needing is much more important in points where the fibres are not protected within cables, but they are directly exposed outside.

Particularly, these exposition conditions of the fibres are present in correspondence of the couplings between cables (necessary to realise connection longer than the single length of the fibre cables) and of the fibre terminations (where it is necessary to access to the fibres by optic connectors).

In view of the above, particular care has been dedicated to the realisation of suitable containers to house the couplings and the terminations of the optic fibre cables, that are easy accessible for every kind of work, include the maintenance.

From the art, the Italian patent applications n° RM99A000456 and RM99A000457 are already known, filed by the same Applicant, concerning a connection container and termination module for optic fibre cables, comprising a series of apparatuses among which also particular modular connection trays for the optic fibres, with dispersion of the exceeding length, necessary for possible other junctions and anti-stress paths.

Devices according to said application allow a more immediate access to the fibres, thus guaranteeing optimum safety conditions.

However, it has been noted that, notwithstanding the above solutions, connection modular trays are still the most delicate fitting among those employed to realise connection and termination devices for optic fibres, so as to require a new study of their structure, in order to obtain a more protective configuration of the structure with respect to the present one and to guarantee a better maintenance of the same fibres.

This problem is even more felt when it is necessary to increase the number of the connection modular trays within each single connection container or termination module. In fact, as a consequence of the increase of the number of connection trays, the scarcity of space obliges to reduce their thickness, and consequently their height, thus making not safe and stabile their housing.

In this situation it is included the solution suggested according to the present invention, suggesting an improved connection modular tray for copper optic and/or mixed cable comprising means for the mechanical protection of the cables contained within the same.

It is therefore specific object of the present invention an improved connection modular tray for optic and/or copper mixed cables comprising a base provided with layout and anti-stress paths for housing optic fibres and for dispersing their exceeding length, further comprising a protection cover and means for blocking said base with said protection cover.

According to the invention, said protection cover has the same perimeter of the base and has a flat shape and a smooth surface.

Particularly, according to the present invention, said means for blocking said base and said protection cover comprises fixed joint means, such as, for example, a coupler hole, provided on the base, and a coupler cylinder, realised on the lower surface of the protection cover.

Furthermore, always according to the invention, said connection tray for optic and/or copper mixed cables can also comprise positioning means between the base and the protection cover, said means eventually comprising at least a raised segment, realised on the protection cover, coupling with a seat obtained on the base, or can comprise at least a second coupler hole on the base and a second coupler cylinder on the lower surface of the protection cover.

Finally, according to the invention, said base and/or protection cover can be coloured, to put into evidence different kind of fibres contained in each connection tray.

Further details, particularity and advantages of the present invention will be evident from the following description, making reference to the enclosed drawings, wherein it is shown for illustrative but not limitative purposes the preferred embodiment.

In the drawings:

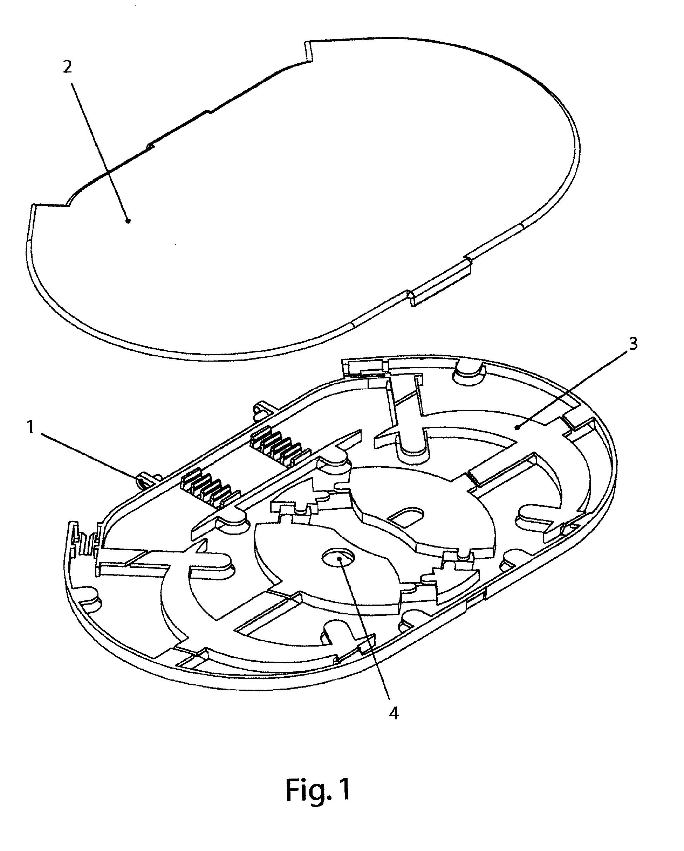

figure 1 shows a top perspective view of the base and of the cover of the modular tray for connection and dispersion of the fibres according to the present invention;

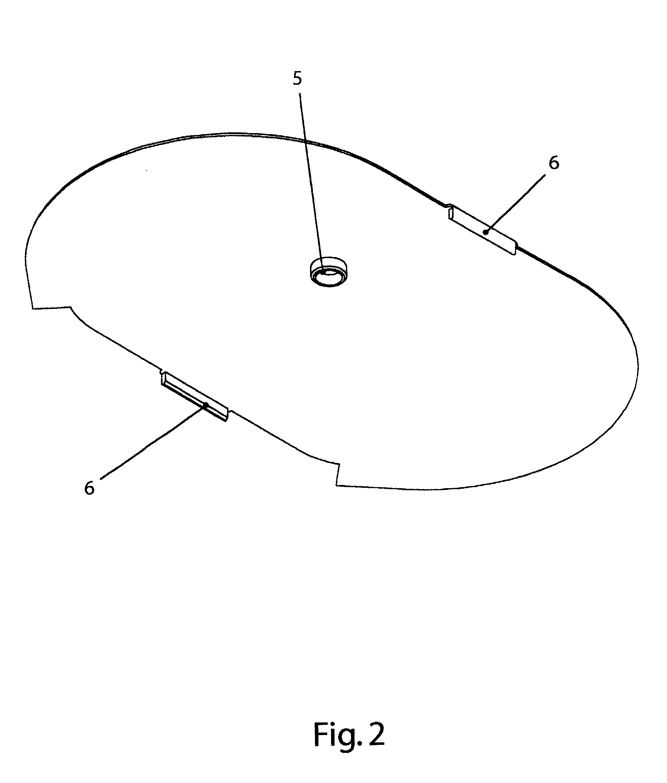

figure 2 is a bottom perspective view of the protection cover,
figure 3 is a top perspective view of a connection container for optic fibre cables on which the trays according to the invention are applied, the container cover being represented in section; and
figure 4 is a top perspective view of an optic fibre cable termination module on which the trays according to the invention are applied.

Making specific reference to the drawings, it can be noted that, assuming in any case that the structure is realised according to the best technique presently available for this kind of products, the connection modular trays according to the present invention are comprised of two essential components, namely a base 1, having different layout paths 3 for housing the optic fibres and dispersing their exceeding length, and a cover 2, having a flat shape and a smooth surface, comprised of metal or plastic material, or of any other suitable material, having the same perimeter of the base 1, in such a way to cover it completely.

Coupling between the base 1 and the cover 2 is guaranteed by a coupler hole 4 provided on the base 1, within which a coupler cylinder 5 is inserted, provided on the lower surface of the cover 2.

The cover 2 is provided, on two opposite sides, with two ribordate portions 6, embracing the base 1 and ensuring the proper positioning during the closure.

A simple pressure on the cover, in such a way to fix the fixed coupler cylinder 5 carries out the coupling between the two components. With the same simple action, it is possible to remove the cover, to reach the fibres contained within the connection tray.

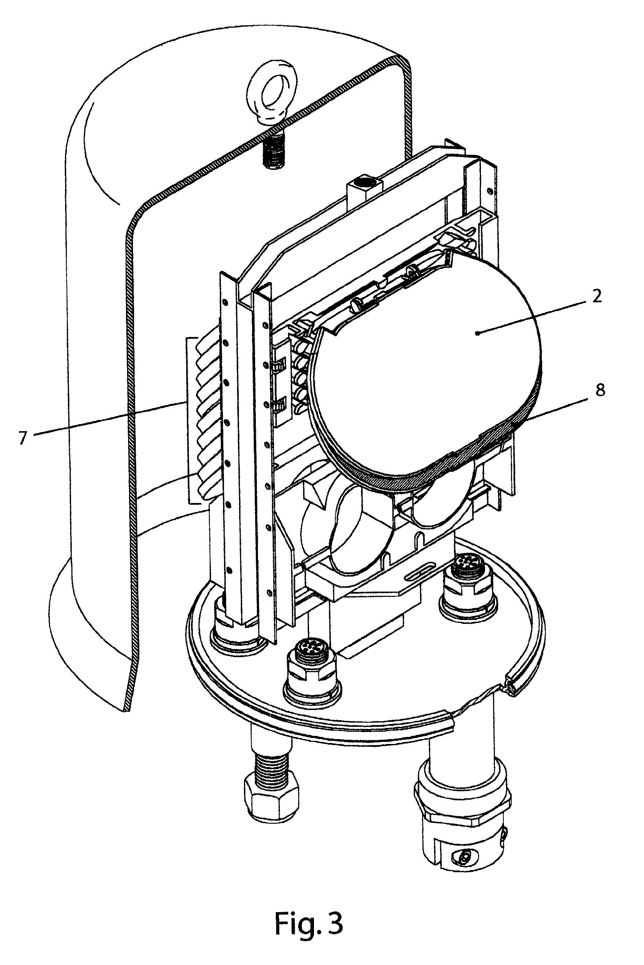

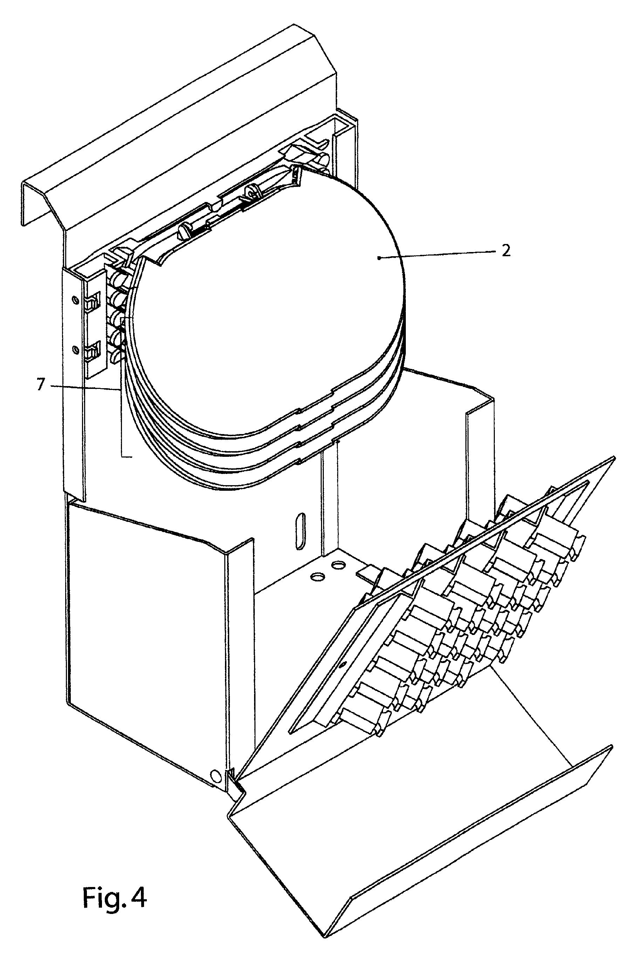

As to the housing of the connection trays according to the invention, making reference to figures 3 and 4, within the connection container or termination modules it is still possible to make a stack 7 of connection modular trays, according to the teachings of the Italian patent applications n° RM99A000456 and RM99A000457 filed by the same Applicant.

Furthermore, to distinguish the trays according to the different fibres contained therein, it is sufficient to colour the cover, as shown in figure 3 for the modular tray 8. This needing is more important now that optic fibres having different features are used, being it necessary to distinguish one kind from the others.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Improved connection modular tray for optic and/or copper mixed cables comprising a base (1) provided with layout and anti-stress paths (3) for housing optic fibres and for dispersing their exceeding length, **characterised in that** it further comprises a protection cover (2) and means for blocking said base (1) with said protection cover (2).

2. Improved connection modular tray for optic and/or copper mixed cables according to claim 1, **characterised in that** said protection cover (2) has the same perimeter of the base (1) and has a flat shape and a smooth surface.

3. Improved connection modular tray for optic and/or copper mixed cables according to one of the claims 1 and 2, **characterised in that** said means for blocking said base (1) and said protection cover (2) comprises fixed joint means.

4. Improved connection modular tray for optic and/or copper mixed cables according to claim 3, **characterised in that** said means for blocking said base (1) and said protection cover (2) comprises a coupler hole (4), provided on the base (1), and a coupler cylinder (5), realised on the lower surface of the protection cover (2).

5. Improved connection modular tray for optic and/or copper mixed cables according to one of the claims 1 - 4, **characterised in that** further comprises positioning means between the base (1) and the protection cover (2).

6. Improved connection modular tray for optic and/or copper mixed cables according to claim 5, **characterised in that** said positioning means between the base (1) and the protection cover (2) comprises at least a raised segment (6), realised on the protection cover (2), coupling with a seat obtained on the base (1).

7. Improved connection modular tray for optic and/or copper mixed cables according to claim 5, **characterised in that** said positioning means between the base (1) and the protection cover (2) comprises at least a second coupler hole on the base (1) and a second coupler cylinder on the lower surface of the protection cover (2).

8. Improved connection modular tray for optic and/or copper mixed cables according to one of the claims 1 - 7, **characterised in that** said base (1) and/or protection cover (2) are coloured, to put into evidence different kind of fibres contained in each connection tray.

9. Improved connection modular tray for optic and/or copper mixed cables according to each one of the claims 1 - 8, substantially as illustrated and described.
